# EUROPÄISCHE PATENTSCHRIFT

(11) **EP 3 002 652 B1**
(45) Veröffentlichungstag und Bekanntmachung des Hinweises auf die Patenterteilung: **17.04.2019**
(21) Anmeldenummer: 14187105.3
(22) Anmeldetag: 30.09.2014
(51) Int. Cl.: G05B 23/02

(54) **Verfahren zur Zustandsüberwachung innerhalb eines industriellen Automatisierungssystems und Steuerungsprogramm**
Method for monitoring the state within an industrial automation system and control program
Procédé de surveillance d'état dans un système d'automatisation industriel et programme de commande

(43) Veröffentlichungstag der Anmeldung: 06.04.2016
(73) Patentinhaber: Siemens Aktiengesellschaft, 80333 München (DE)
(72) Erfinder: Ritzer, Josef, 76149 Karlsruhe (DE); Fuchs, Heiner, 91056 Erlangen (DE); Götz, Thomas, 92546 Schmidgaden (DE)

(56) Entgegenhaltungen:
- EP-A1- 1 703 350
- DE-A1-102007 047 421
- DE-A1-102011 076 780
- US-B1- 6 757 668

## Beschreibung

Industrielle Automatisierungssysteme dienen zur Überwachung, Steuerung und Regelung von technischen Prozessen, insbesondere im Bereich Fertigungs-, Prozess- und Gebäudeautomatisierung, und ermöglichen einen Betrieb von Steuerungseinrichtungen, Sensoren, Maschinen und industriellen Anlagen, der möglichst selbständig und unabhängig von menschlichen Eingriffen erfolgen soll. Aufgrund einer ständig steigenden Bedeutung von Informationstechnik für Automatisierungssysteme, die zahlreiche vernetzte Steuerungs- bzw. Rechnereinheiten umfassen, gewinnen Verfahren zur zuverlässigen Bereitstellung von über ein Automatisierungssystem verteilten Funktionen für eine Bereitstellung von Überwachungs-, Steuerungs- und Regelungsfunktionen verstärkt an Bedeutung.

Zustandsinformationen innerhalb industrieller Automatisierungssysteme sind zur Betriebsführung und Überwachung möglichst aktuell zu halten. Dies erfordert eine Erfassung, Bewertung und Signalisierung von Ereignissen und Fehlern in industriellen Automatisierungsgeräten. Üblicherweise werden zu erfassende, bewertende und signalisierende Ereignisse und Fehler sowie auszulösende Reaktionen bereits während einer Projektierungsphase festgelegt. Hieraus wird ein Diagnosemodell abgeleitet, das insbesondere Abhängigkeiten zwischen Komponenten eines industriellen Automatisierungssystems wiedergibt. Unter Berücksichtigung hierarchischer Abhängigkeiten können damit Probleme in einer Anlagenkonfiguration erkannt, lokalisiert und hinsichtlich ihrer Auswirkungen klassifiziert werden.

Aus EP 1 703 350 A1 ist ein Verfahren zur Erzeugung eines Diagnosemodells für ein aus verschiedenen Automatisierungskomponenten aufgebautes Automatisierungssystem bekannt, bei dem das Diagnosemodell automatisch während einer Projektierungsphase des Automatisierungssystems generiert wird. Innerhalb des Diagnosemodells werden die Automatisierungskomponenten durch Modelknoten repräsentiert. Funktionale bzw. physikalische Beziehungen zwischen den Automatisierungskomponenten werden durch Verknüpfungen der entsprechenden Modellknoten innerhalb des Diagnosemodells abgebildet. Jeder Modellknoten umfasst eine Statusinformation, die einen Status der jeweiligen Automatisierungskomponente repräsentiert. Durch Auswertung der Statusinformationen kann der Zustand des Automatisierungssystems mit Hilfe des Diagnosemodells untersucht und überwacht werden.

In EP 2 284 631 A1 ist ein Fahrzeugdiagnosesystem beschrieben, bei dem Komponenten bzw. Funktionen von zu prüfenden oder einzustellenden Fahrzeugen durch Knoten in einem hierarchisch gegliederten Diagnoseobjektbaum repräsentiert werden. Mögliche Fehler in Fahrzeugkomponenten bzw. -funktionen werden durch Knoten in einem hierarchisch gegliederten Fehlerobjektbaum repräsentiert. Dabei ist zumindest ein Knoten des Diagnoseobjektbaums durch zumindest einen Knoten des Fehlerobjektbaums referenzierbar. Den Diagnoseobjektbaum und Fehlerobjektbaum umfassende Fahrzeugdiagnosedaten werden in einer Datenbasis des Fahrzeugdiagnosesystems erfaßt, validiert und für einen Zugriff durch Feldgeräte bereitgestellt. Bei Nutzung der Fahrzeugdiagnosedaten durch ein Feldgerät während eines Prüf- und/oder Einstellvorgangs wird ein Diagnoseprotokoll aufgezeichnet und an eine Auswerteeinrichtung des Fahrzeugdiagnosesystems übermittelt. Anhand des Diagnoseprotokolls werden unter Berücksichtigung jeweils genutzter Fahrzeugdiagnosedaten durch die Auswerteeinrichtung zu ändernde Referenzen auf Knoten des Diagnoseobjektbaums oder zu ändernde Symptomgewichte ermittelt. Durch die Auswerteeinrichtung ermittelte Änderungen der Fahrzeugdiagnosedaten werden zur Verifizierung vor einer Übernahme in die Datenbasis bereitgestellt. Auf diese Weise wird eine automatische Anpassung von für ein Fahrzeugdiagnosesystem vordefinierten Diagnoseprozessen ermöglicht.

Der vorliegenden Erfindung liegt die Aufgabe zugrunde, ein Verfahren zur Zustandsüberwachung innerhalb eines industriellen Automatisierungssystems anzugeben, das eine Berücksichtigung von einfach oder mehrfach redundant vorhandenen Komponenten bei einer Zustandsbewertung ermöglicht, sowie eine geeignete technische Implementierung des Verfahrens anzugeben. Diese Aufgabe wird erfindungsgemäß durch ein Verfahren mit den in Anspruch 1 angegebenen Merkmalen und durch ein Steuerungsprogramm mit den in Anspruch 10 angegebenen Merkmalen gelöst. Vorteilhafte Weiterbildungen der vorliegenden Erfindung sind in den abhängigen Ansprüchen angegeben. Entsprechend dem erfindungsgemäßen Verfahren zur Zustandsüberwachung innerhalb eines industriellen Automatisierungssystems werden Automatisierungsgeräte bzw. Komponenten des industriellen Automatisierungssystems jeweils durch Knoten innerhalb eines hierarchisch gegliederten Diagnoseobjektbaums repräsentiert. Funktionale Abhängigkeiten zwischen Automatisierungsgeräten bzw. Komponenten werden durch Verbindungen zwischen Knoten des Diagnoseobjektbaums repräsentiert. Jedem Knoten des Diagnoseobjektbaums wird jeweils eine Zustandsinformation eines Automatisierungsgeräts oder einer Komponente zugeordnet wird, das bzw. die durch den jeweiligen Knoten repräsentiert wird.

Darüber hinaus wird jedem Knoten des Diagnoseobjektbaums erfindungsgemäß jeweils eine aggregierte Zustandsinformation eines hierarchisch untergeordneten Teilbaums zugeordnet. Die jeweilige aggregierte Zustandsinformation wird aus Zustandsinformationen gebildet, die vom jeweiligen Teilbaum umfassten Knoten zugeordnet sind. Knoten des Diagnoseobjektbaums, denen redundante Automatisierungsgeräte bzw. Komponenten zugeordnet sind, leiten zur Bildung der jeweiligen aggregierten Zustandsinformation an ihren übergeordneten Knoten jeweils eine verknüpfte Zustandsinformation weiter. Diese verknüpfte Zustandsinformation wird aus den jeweiligen Zustandsinformationen gebildet, die den jeweiligen zueinander redundanten Automatisierungsgeräten oder Komponenten zugeordnet sind. Knoten des Diagnoseobjektbaums, denen redundante Automatisierungsgeräte bzw. Komponenten als Redundanzpartner zugeordnet sind, sind jeweils durch einen Verweis auf einen jeweiligen nächsten Redundanzpartner miteinander in einer Ringstruktur verknüpft. Auf diese Weise ist eine zuverlässige Identifizierung zueinander redundanter Automatisierungsgeräte bzw. Komponenten sowie eine adäquate Berücksichtigung von Komponentenredundanzen im Sinn einer aussagekräftigen Zustandsbewertung möglich.

Entsprechend einer besonders bevorzugten Ausgestaltung der vorliegenden Erfindung wird die einem ersten Knoten zugeordnete verknüpfte Zustandsinformation aus einer dem ersten Knoten zugeordneten Zustandsinformation und einer Zustandsinformation gebildet wird, die einem ein redundantes Automatisierungsgerät oder eine redundante Komponente repräsentierenden zweiten Knoten zugeordnet ist. Dabei repräsentiert die für den ersten Knoten gebildete verknüpfte Zustandsinformation zumindest einen gleichen oder gleichwertigen Zustand wie die dem ersten Knoten zugeordnete Zustandsinformation. Durch eine derartige asymmetrische Verknüpfung kann eine Auswirkung eines Fehlers im Rahmen einer Zustandsbewertung durch einen besseren bzw. unkritischeren Status einer redundanten Partnerkomponente gedämpft werden, während bei einem schlechteren oder kritischeren Status der redundanten Partnerkomponente keine Verschlechterung erfolgt.

Darüber hinaus kann die für den ersten Knoten gebildete verknüpfte Zustandsinformation entsprechend einer weiteren Ausgestaltung des erfindungsgemäßen Verfahrens bei ersten Kombinationen von Zustandsinformationen des ersten Knotens und des zweiten Knotens einen besseren oder höherwertigen Zustand repräsentieren als die dem ersten Knoten zugeordnete Zustandsinformation. In diesem Fall repräsentiert die für den ersten Knoten gebildete verknüpfte Zustandsinformation bei zweiten Kombinationen von Zustandsinformationen des ersten Knotens und des zweiten Knotens einen gleichen oder gleichwertigen Zustand wie die dem ersten Knoten zugeordnete Zustandsinformation.

Entsprechend einer vorteilhaften Weiterbildung des erfindungsgemäßen Verfahrens repräsentieren die dem ersten Knoten und dem zweiten Knoten jeweils zugeordneten Zustandsinformationen beispielsweise die Zustände gut, Wartung erforderlich, Wartung angefordert oder Fehler. Dabei entspricht eine Rangordnung dieser Zustände ihrer Reihenfolge in vorangehender Aufzählung. Darüber hinaus umfassen die erste Kombinationen von Zustandsinformationen die Zustände Wartung angefordert und Fehler des ersten Knotens zusammen mit den Zuständen gut und Wartung erforderlich des zweiten Knotens. Entsprechend einer weiteren Ausgestaltung der vorliegenden Erfindung repräsentiert die für den ersten Knoten gebildete verknüpfte Zustandsinformation bei den ersten Kombinationen von Zustandsinformationen des ersten Knotens und des zweiten Knotens einen um eine Zustandsstufe besseren oder höherwertigen Zustand als die dem ersten Knoten zugeordnete Zustandsinformation. Vorteilhafterweise umfassen die zweiten Kombinationen von Zustandsinformationen alle Kombinationen bis auf die ersten Kombinationen. Dies ermöglicht bei einer Systemdiagnose eine Propagierung von Redundanzverlusten in angemessen verminderter Fehlerschwere. Alternativ zu o.g. Zuständen können je nach Anwendungsanforderungen grundsätzlich auch andere Definitionen, Anzahlen und Verknüpfungen von Zuständen verwendet werden.

Bei mehr als zwei redundanten Automatisierungsgerät bzw. Komponenten wird die einem ersten Knoten zugeordnete verknüpfte Zustandsinformation vorzugsweise aus der dem ersten Knoten zugeordneten Zustandsinformation und der Zustandsinformation gebildet, die dem zweiten bzw. dritten Knoten zugeordnet ist und unter diesen den jeweils besten oder höchstwertigen Zustand repräsentiert. Damit kann obiger Ansatz für eine asymmetrische Bildung einer zu propagierenden verknüpften Zustandsinformation in einfacher Weise auch auf Szenarien mit vielfach redundant vorhandenen Komponenten im Sinn eines "best state in group" übertragen werden. Insbesondere lassen sich damit mehrfach redundant vorhandene Automatisierungsgeräte oder Komponenten analog zu einfachen Redundanzen behandeln. Grundsätzlich ist auch eine Übertragung im Sinn eines "worst state in group" oder weiterer alternativer Propagierungsansätze möglich.

Entsprechend einer weiteren Ausgestaltung der vorliegenden Erfindung wird die jedem Knoten des Diagnoseobjektbaums jeweils zugeordnete Zustandsinformation unter Berücksichtigung der aggregierten Zustandsinformation des jeweiligen hierarchisch untergeordneten Teilbaums gebildet. Darüber hinaus leiten Knoten des Diagnoseobjektbaums, denen einfach vorhandene Automatisierungsgeräte bzw. Komponenten zugeordnet sind, zur Bildung der jeweiligen aggregierten Zustandsinformation an einen jeweils übergeordneten Knoten vorzugsweise nur die ihnen jeweils zugeordnete Zustandsinformation weiter. Dies ermöglicht im Rahmen einer Systemdiagnose eine angemessene Differenzierung zwischen einfach und redundant vorhandenen Automatisierungsgeräten bzw. Komponenten.

Das erfindungsgemäße Steuerungsprogramm ist in einen Arbeitsspeicher einer Rechnereinheit ladbar und weist zumindest einen durch einen Prozessor verarbeitbaren Codeabschnitt auf, bei dessen Ausführung vorangehend beschriebene Verfahrensschritte, insbesondere diejenigen des erfindungsgemäßen Verfahrens, ausgeführt werden, wenn das Steuerungsprogramm in der Rechnereinheit abläuft.

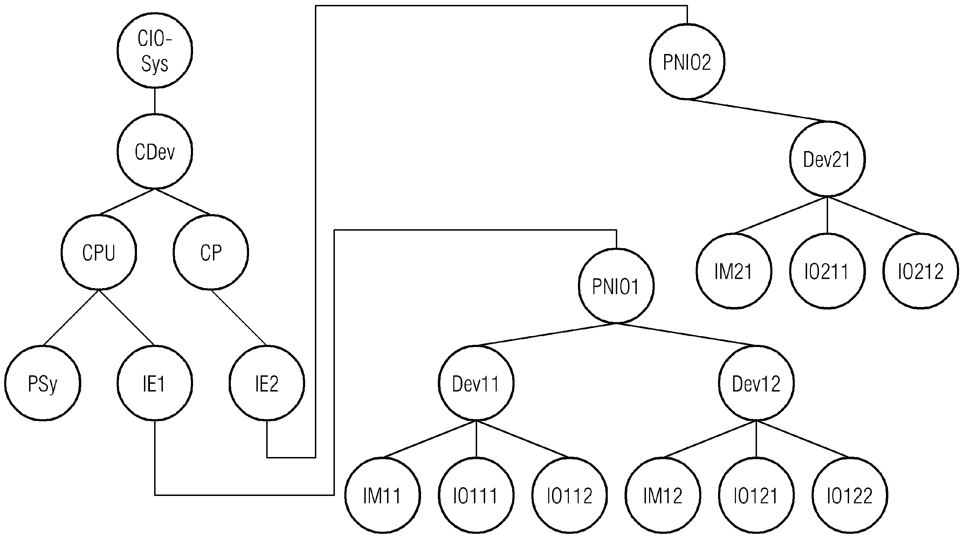

Die vorliegende Erfindung wird nachfolgend an einem Ausführungsbeispiel anhand der Zeichnung näher erläutert. Es zeigt die
- Figur: eine graphische Repräsentation von Automatisierungsgeräten bzw. Komponenten eines industriellen Automatisierungssystems innerhalb eines hierarchisch gegliederten Diagnoseobjektbaums.

Das in der Figur dargestellte industrielle Automatisierungssystem CIO-Sys umfasst Automatisierungsgeräte bzw. Komponenten, die jeweils durch einen Knoten innerhalb eines hierarchisch gegliederten Diagnoseobjektbaums repräsentiert werden. Dabei werden funktionale Abhängigkeiten zwischen Automatisierungsgeräten bzw. Komponenten durch Verbindungen zwischen Knoten des Diagnoseobjektbaums repräsentiert. Entsprechend dem vorliegenden Ausführungsbeispiel umfasst das industrielle Automatisierungssystem CIO-Dev als hierarchisch untergeordnete Komponente eine speicherprogrammierbare Steuerung CDev, die ihrerseits eine Zentraleinheit CPU und einen Kommunikationsprozessor CP als untergeordnete Komponenten umfasst. Der Zentraleinheit CPU sind eine Stromversorgungseinheit PSy und eine erste Schnittstelleneinheit IE1 als untergeordnete Komponenten zugeordnet, während der Kommunikationsprozessor CP eine zweite Schnittstelleneinheit IE2 als untergeordnete Komponente aufweist.

Der zweiten Schnittstelleneinheit IE2 sind im vorliegenden Ausführungsbeispiel eine erste PROFINET-Ein-/Ausgabeeinheit PNIO1 und eine zweite PROFINET-Ein-/Ausgabeeinheit PNIO2 untergeordnet. Die erste PROFINET-Ein-/Ausgabeeinheit PNIO1 umfasst ein erstes Devll und zweites PROFINET-Gerät Dev12, die jeweils ein Eingabemodul IM11 bzw. IM12 sowie zwei Ein-/Ausgabe-Baugruppen IO111, IO112 bzw. IO121, IO122 aufweisen. In entsprechender Weise ist der zweiten PROFINET-Ein-/Ausgabeeinheit PNIO2 ein drittes PROFINET-Gerät Dev21 zugeordnet, das ein Eingabemodul IM21 sowie zwei Ein-/Ausgabe-Baugruppen IO211, IO212 umfasst.

Im vorliegenden Ausführungsbeispiel werden die Ein-/Ausgabe-Baugruppen IO111, IO122, IO211, IO212 insgesamt vierfach redundant betrieben, so dass diese Ein-/Ausgabe-Baugruppen zueinander redundante Komponenten darstellen. Für eine Zustandsüberwachung bzw. Systemdiagnose innerhalb des industriellen Automatisierungssystems CIO-Sys wird jedem Knoten des Diagnoseobjektbaums jeweils eine Zustandsinformation einer Komponente zugeordnet, die durch den jeweiligen Knoten repräsentiert wird. Darüber hinaus wird jedem Knoten des Diagnoseobjektbaums jeweils eine aggregierte Zustandsinformation eines hierarchisch untergeordneten Teilbaums zugeordnet. Die jeweilige aggregierte Zustandsinformation wird aus Zustandsinformationen gebildet, die vom jeweiligen Teilbaum umfassten Knoten zugeordnet sind. Dabei wird die jedem Knoten des Diagnoseobjektbaums jeweils zugeordnete Zustandsinformation im vorliegenden Ausführungsbeispiel unter Berücksichtigung der aggregierten Zustandsinformation des jeweiligen hierarchisch untergeordneten Teilbaums gebildet.

Knoten des Diagnoseobjektbaums, denen redundante Automatisierungsgeräte bzw. Komponenten als Redundanzpartner zugeordnet sind, werden jeweils durch einen Verweis auf einen jeweiligen nächsten Redundanzpartner miteinander in einer Ringstruktur verknüpft. Des weiteren leiten Knoten des Diagnoseobjektbaums, denen redundante Komponenten zugeordnet sind, zur Bildung der jeweiligen aggregierten Zustandsinformation an ihren übergeordneten Knoten jeweils eine verknüpfte Zustandsinformation weiter, die aus den jeweiligen Zustandsinformationen gebildet wird, die den jeweiligen zueinander redundanten Automatisierungsgeräten oder Komponenten zugeordnet sind. Dagegen leiten Knoten des Diagnoseobjektbaums, denen einfach vorhandene Komponenten zugeordnet sind, zur Bildung der jeweiligen aggregierten Zustandsinformation an einen jeweils übergeordneten Knoten nur die ihnen jeweils zugeordnete Zustandsinformation weiter.

Im vorliegenden Ausführungsbeispiel gilt allgemein, dass die für den ersten Knoten gebildete verknüpfte Zustandsinformation bei einer ersten Gruppe von Zustandsinformationen des ersten Knotens und des zweiten Knotens einen höherwertigen Zustand repräsentiert als die dem ersten Knoten zugeordnete Zustandsinformation. Bei einer zweiten Gruppe von Zustandsinformationen des ersten Knotens und des zweiten Knotens repräsentiert die für den ersten Knoten gebildete verknüpfte Zustandsinformation einen gleichwertigen Zustand wie die dem ersten Knoten zugeordnete Zustandsinformation. Somit führt eine Verknüpfung von Zustandsinformationen bei ein- oder mehrfachen Redundanzen entsprechend dem vorliegendem Ausführungsbeispiel zumindest zu keiner verschlechterten Zustandsbewertung.

In der nachstehenden ersten Tabelle ist für die Ein-/AusgabeBaugruppe IO111 beispielhaft dargestellt, wie für diese Baugruppe anhand von Zustandsinformationen, die den redundanten Ein-/Ausgabe-Baugruppen IO122, IO211, IO212 zugeordnet sind, zweischrittig eine verknüpfte Zustandsinformation IO111_RES gebildet wird, die an das erste PROFINET-Gerät DEvll als übergeordneter Komponente weitergeleitet wird.

| IO111_RES | IO111 | IO111_RED | IO122 | IO211 | IO212 |
|---|---|---|---|---|---|
| 0 (GOOD) | 0 (GOOD) | 0 (GOOD) | 0 (GOOD) | 0 (GOOD) | 3 (ERR) |
| 0 (GOOD) | 0 (GOOD) | 0 (GOOD) | 0 (GOOD) | 1 (MR) | 3 (ERR) |
| 0 (GOOD) | 0 (GOOD) | 0 (GOOD) | 0 (GOOD) | 2 (MD) | 3 (ERR) |
| 0 (GOOD) | 0 (GOOD) | 0 (GOOD) | 0 (GOOD) | 3 (ERR) | 3 (ERR) |
| 1 (MR) | 1 (MR) | 0 (GOOD) | 1 (MR) | 0 (GOOD) | 3 (ERR) |
| 1 (MR) | 1 (MR) | 1 (MR) | 1 (MR) | 1 (MR) | 3 (ERR) |
| 1 (MR) | 1 (MR) | 1 (MR) | 1 (MR) | 2 (MD) | 3 (ERR) |
| 1 (MR) | 1 (MR) | 1 (MR) | 1 (MR) | 3 (ERR) | 3 (ERR) |
| 1 (MR) | 2 (MD) | 0 (GOOD) | 2 (MD) | 0 (GOOD) | 3 (ERR) |
| 1 (MR) | 2 (MD) | 1 (MR) | 2 (MD) | 1 (MR) | 3 (ERR) |
| 2 (MD) | 2 (MD) | 2 (MD) | 2 (MD) | 2 (MD) | 3 (ERR) |
| 2 (MD) | 2 (MD) | 2 (MD) | 2 (MD) | 3 (ERR) | 3 (ERR) |
| 2 (MD) | 3 (ERR) | 0 (GOOD) | 3 (ERR) | 0 (GOOD) | 3 (ERR) |
| 2 (MD) | 3 (ERR) | 1 (MR) | 3 (ERR) | 1 (MR) | 3 (ERR) |
| 3 (ERR) | 3 (ERR) | 2 (MD) | 3 (ERR) | 2 (MD) | 3 (ERR) |
| 3 (ERR) | 3 (ERR) | 3 (ERR) | 3 (ERR) | 3 (ERR) | 3 (ERR) |

Die verknüpfte Zustandsinformation IO111_RES ist dabei in der linken Spalte dargestellt. Die der Ein-/Ausgabe-Baugruppe IO111 zugeordnete Zustandsinformation ist in der zweiten Spalte von links wiedergegeben. In der zweiten Spalte von links ist eine resultierende Zustandsinformation IO111_RED angegeben, die in einem ersten Schritt aus den Zustandsinformationen der redundanten Ein-/Ausgabe-Baugruppen IO122, IO211, IO212 gebildet wird, die in den drei rechten Spalten dargestellt sind. Die resultierende Zustandsinformation IO111_RED entspricht im vorliegenden Ausführungsbeispiel der Zustandsinformation, die unter den redundanten Ein-/Ausgabe-Baugruppen IO122, IO211, IO212 jeweils den höchstwertigen Zustand repräsentiert. In einem zweiten Schritt wird aus der resultierenden Zustandsinformation IO111_RED und der Zustandsinformation, die der Ein-/Ausgabe-Baugruppe IO111 zugeordnet ist, die verknüpfte Zustandsinformation IO111_RES analog zur Behandlung einfacher Redundanzen gebildet.

Die den Ein-/Ausgabe-Baugruppen IO111, IO122, IO211, IO212 zuordenbaren Zustandsinformationen können jeweils die Zustände gut ("GOOD"), Wartung erforderlich ("MR" - maintenance required), Wartung angefordert ("MD" - maintenance demanded) oder Fehler ("ERR" - error) entsprechend PROFINET-Norm repräsentieren. Dabei gelten für die einzelnen Zustände folgende Wertezuordnungen: 0-GOOD, 1-MR, 2-MD, 3-ERR.

Entsprechend obiger Tabelle ist die verknüpfte Zustandsinformation IO111_RES um eine Zustandsstufe höherwertiger als die der Ein-/Ausgabe-Baugruppe IO111 zugeordnete Zustandsinformation, wenn die resultierende Zustandsinformation IO111_RED die Zustände die Zustände gut ("GOOD") oder Wartung erforderlich ("MR") repräsentiert, und wenn die der Ein-/AusgabeBaugruppe IO111 zugeordnete Zustandsinformation gleichzeitig die Zustände Wartung angefordert ("MD") oder Fehler ("ERR") repräsentiert. Für alle übrigen Kombinationen von Zustandsinformationen entspricht die verknüpfte Zustandsinformation IO111_RES der Zustandsinformation, die der Ein-/AusgabeBaugruppe IO111 zugeordnet ist. Dies bedeutet, dass redundante Komponenten in diesen Fällen keine verbesserte Zustandsbewertung ermöglichen.

In der nachstehenden zweiten Tabelle ist für die Ein-/Ausgabe-Baugruppe IO212 dargestellt, wie für diese Baugruppe anhand von Zustandsinformationen, die den redundanten Ein-/Ausgabe-Baugruppen IO111, IO122, IO211 zugeordnet sind, analog zu obigen Ausführungen eine verknüpfte Zustandsinformation IO212_RES gebildet wird, die an das dritte PROFINET-Gerät DEv21 als übergeordneter Komponente weitergeleitet wird. Die verknüpfte Zustandsinformation IO212_RES ist dabei in der linken Spalte der nachstehenden Tabelle dargestellt. Die der Ein-/Ausgabe-Baugruppe IO212 zugeordnete Zustandsinformation ist in der zweiten Spalte von links wiedergegeben. In der zweiten Spalte von links ist eine resultierende Zustandsinformation IO212_RED angegeben, die aus den Zustandsinformationen der redundanten Ein-/Ausgabe-Baugruppen IO111, IO122, IO211 gebildet wird, die in den drei rechten Spalten dargestellt sind.

| IO212_RES | IO212 | IO212_RED | IO111 | IO122 | IO211 |
|---|---|---|---|---|---|
| 2 (MD) | 3 (ERR) | 0 (GOOD) | 0 (GOOD) | 0 (GOOD) | 0 (GOOD) |
| 2 (MD) | 3 (ERR) | 0 (GOOD) | 0 (GOOD) | 0 (GOOD) | 1 (MR) |
| 2 (MD) | 3 (ERR) | 0 (GOOD) | 0 (GOOD) | 0 (GOOD) | 2 (MD) |
| 2 (MD) | 3 (ERR) | 0 (GOOD) | 0 (GOOD) | 0 (GOOD) | 3 (ERR) |
| 2 (MD) | 3 (ERR) | 0 (GOOD) | 1 (MR) | 1 (MR) | 0 (GOOD) |
| 2 (MD) | 3 (ERR) | 1 (MR) | 1 (MR) | 1 (MR) | 1 (MR) |
| 2 (MD) | 3 (ERR) | 1 (MR) | 1 (MR) | 1 (MR) | 2 (MD) |
| 2 (MD) | 3 (ERR) | 1 (MR) | 1 (MR) | 1 (MR) | 3 (ERR) |
| 2 (MD) | 3 (ERR) | 0 (GOOD) | 2 (MD) | 2 (MD) | 0 (GOOD) |
| 2 (MD) | 3 (ERR) | 1 (MR) | 2 (MD) | 2 (MD) | 1 (MR) |
| 3 (ERR) | 3 (ERR) | 2 (MD) | 2 (MD) | 2 (MD) | 2 (MD) |
| 3 (ERR) | 3 (ERR) | 2 (MD) | 2 (MD) | 2 (MD) | 3 (ERR) |
| 2 (MD) | 3 (ERR) | 0 (GOOD) | 3 (ERR) | 3 (ERR) | 0 (GOOD) |
| 2 (MD) | 3 (ERR) | 1 (MR) | 3 (ERR) | 3 (ERR) | 1 (MR) |
| 3 (ERR) | 3 (ERR) | 2 (MD) | 3 (ERR) | 3 (ERR) | 2 (MD) |
| 3 (ERR) | 3 (ERR) | 3 (ERR) | 3 (ERR) | 3 (ERR) | 3 (ERR) |

Auch in diesem Fall ist die verknüpfte Zustandsinformation IO212_RES um eine Zustandsstufe höherwertiger als die der Ein-/Ausgabe-Baugruppe IO212 zugeordnete Zustandsinformation, wenn die resultierende Zustandsinformation IO212_RED die Zustände die Zustände gut ("GOOD") oder Wartung erforderlich ("MR") repräsentiert, und wenn die der Ein-/Ausgabe-Baugruppe IO212 zugeordnete Zustandsinformation gleichzeitig die Zustände Wartung angefordert ("MD") oder Fehler ("ERR") repräsentiert; in der zweiten Tabelle sind die Zustände gut ("GOOD"), Wartung erforderlich ("MR") und Wartung angefordert ("MD") für die Ein-/Ausgabe-Baugruppe IO212 nicht explizit dargestellt. Grundsätzlich gilt aber, dass die verknüpfte Zustandsinformation IO212_RES für alle übrigen Kombinationen von Zustandsinformationen als oben genannte der Zustandsinformation entspricht, die der Ein-/Ausgabe-Baugruppe IO212 zugeordnet ist.

Aus Gründen einer besseren Übersichtlichkeit umfassen vorangehend dargestellte Tabellen nicht sämtliche möglichen Zustandskombinationen, sondern lediglich jeweils eine ausgewählte Untermenge.

Wie oben bereits erwähnt, lässt sich eine Zustandsüberwachung von mehrfach redundant vorhandenen Automatisierungsgeräten oder Komponenten grundsätzlich auf eine Behandlung wie bei einer einfachen Redundanz zurückführen. Entsprechend der nachstehenden Tabelle können sich bei einer Propagierung einer jeweiligen verknüpften Zustandsinformation PROP_X bzw. PROP_Y (siehe linke und rechte Spalte) durch eine erste redundante Komponente COMP_X und eine zweite redundante Komponente COMP_Y Asymmetrien ergeben. Die den beiden redundanten Komponenten COMP_X, COMP_Y zugeordneten Zustandsinformationen sind in den beiden mittleren Spalten angegeben. Durch Einträge "<-" bzw. "->" in der zweiten Spalte von rechts bzw. links wird eine jeweilige Übertragungsrichtung DIR_PROP hervorgehoben. Ersichtlich können sich die jeweiligen verknüpften Zustandsinformationen PROP_X, PROP_Y in Abhängigkeit von der Übertragungsrichtung DIR_PROP trotz identischer zugrundeliegender Zustandsinformationen der Komponenten COMP_X, COMP_Y durchaus unterscheiden. Wesentlich ist nämlich, von welcher Komponente die verknüpften Zustandsinformationen an ihre jeweils hierarchisch übergeordnete Komponente weitergeleitet werden. Die Zustandsinformationen der Komponenten COMP_X, COMP_Y werden also bei ihrer Verknüpfung miteinander entsprechend der jeweiligen Übertragungsrichtung unterschiedlich gewichtet.

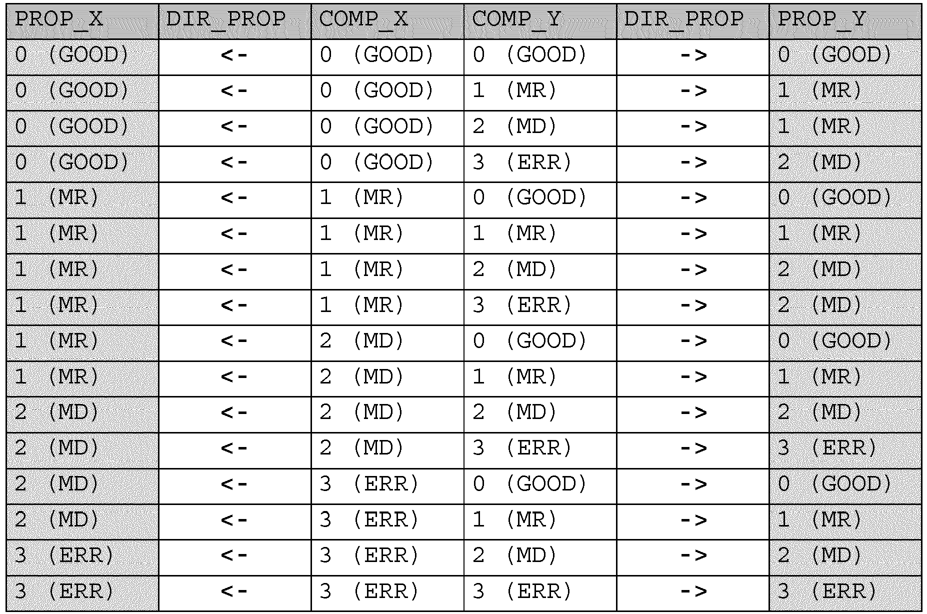

Das vorangehend beschriebene Verfahren wird im vorliegenden Ausführungsbeispiel durch ein Steuerungsprogramm implementiert, das in einen Arbeitsspeicher einer Rechnereinheit ladbar ist und zumindest einen durch einen Prozessor verarbeitbaren Codeabschnitt aufweist, bei dessen Ausführung beschriebene Verfahrensschritte ausgeführt werden, wenn das Steuerungsprogramm in der Rechnereinheit abläuft.

## Patentansprüche

1. Verfahren zur Zustandsüberwachung innerhalb eines industriellen Automatisierungssystems, bei dem
- Automatisierungsgeräte und/oder Komponenten (CDev, CPU, CP, PSy, IE1, IE2) des industriellen Automatisierungssystems (CIO-Sys) jeweils durch Knoten innerhalb eines hierarchisch gegliederten Diagnoseobjektbaums repräsentiert werden,
- funktionale Abhängigkeiten zwischen Automatisierungsgeräten und/oder Komponenten (CDev, CPU, CP, PSy, IE1, IE2) durch Verbindungen zwischen Knoten des Diagnoseobjektbaums repräsentiert werden,
- jedem Knoten des Diagnoseobjektbaums jeweils eine Zustandsinformation eines Automatisierungsgeräts oder einer Komponente zugeordnet wird, das/die durch den jeweiligen Knoten repräsentiert wird,
**dadurch gekennzeichnet, dass**
- jedem Knoten des Diagnoseobjektbaums jeweils eine aggregierte Zustandsinformation eines hierarchisch untergeordneten Teilbaums zugeordnet wird, wobei die jeweilige aggregierte Zustandsinformation aus Zustandsinformationen gebildet wird, die vom jeweiligen Teilbaum umfassten Knoten zugeordnet sind,
- Knoten des Diagnoseobjektbaums, denen redundante Automatisierungsgeräte und/oder Komponenten (IO111, IO122, IO211, IO212) zugeordnet sind, zur Bildung der jeweiligen aggregierten Zustandsinformation an ihren übergeordneten Knoten jeweils eine verknüpfte Zustandsinformation weiterleiten, die aus den jeweiligen Zustandsinformationen gebildet wird, die den jeweiligen zueinander redundanten Automatisierungsgeräten oder Komponenten zugeordnet sind,
- Knoten des Diagnoseobjektbaums, denen redundante Automatisierungsgeräte und/oder Komponenten (IO111, IO122, IO211, IO212) als Redundanzpartner zugeordnet sind, jeweils durch einen Verweis auf einen jeweiligen nächsten Redundanzpartner miteinander in einer Ringstruktur verknüpft sind.

2. Verfahren nach Anspruch 1,
bei dem die einem ersten Knoten zugeordnete verknüpfte Zustandsinformation aus einer dem ersten Knoten zugeordneten Zustandsinformation und einer Zustandsinformation gebildet wird, die einem ein redundantes Automatisierungsgerät oder eine redundante Komponente repräsentierenden zweiten Knoten zugeordnet ist, und bei dem die für den ersten Knoten gebildete verknüpfte Zustandsinformation zumindest einen gleichen oder gleichwertigen Zustand repräsentiert wie die dem ersten Knoten zugeordnete Zustandsinformation.

3. Verfahren nach Anspruch 2,
bei dem die für den ersten Knoten gebildete verknüpfte Zustandsinformation bei ersten Kombinationen von Zustandsinformationen des ersten Knotens und des zweiten Knotens einen besseren oder höherwertigen Zustand repräsentiert als die dem ersten Knoten zugeordnete Zustandsinformation, und bei dem die für den ersten Knoten gebildete verknüpfte Zustandsinformation bei zweiten Kombinationen von Zustandsinformationen des ersten Knotens und des zweiten Knotens einen gleichen oder gleichwertigen Zustand repräsentiert wie die dem ersten Knoten zugeordnete Zustandsinformation.

4. Verfahren nach Anspruch 3,
bei dem die dem ersten Knoten und dem zweiten Knoten jeweils zugeordneten Zustandsinformationen die Zustände gut, Wartung erforderlich, Wartung angefordert oder Fehler repräsentieren, und bei dem die ersten Kombinationen von Zustandsinformationen die Zustände Wartung angefordert und Fehler des ersten Knotens zusammen mit den Zuständen gut und Wartung erforderlich des zweiten Knotens umfassen.

5. Verfahren nach Anspruch 4,
bei dem die für den ersten Knoten gebildete verknüpfte Zustandsinformation bei den ersten Kombinationen von Zustandsinformationen des ersten Knotens und des zweiten Knotens einen um eine Zustandsstufe besseren oder höherwertigen Zustand repräsentiert als die dem ersten Knoten zugeordnete Zustandsinformation.

6. Verfahren nach einem der Ansprüche 4 oder 5,
bei dem die zweiten Kombinationen von Zustandsinformationen alle Kombinationen bis auf die ersten Kombinationen umfassen.

7. Verfahren nach einem der Ansprüche 2 bis 6,
bei dem der ersten Knoten, der zweite Knoten und ein dritter Knoten zueinander redundante Automatisierungsgeräte und/oder Komponenten repräsentieren, und bei dem die einem ersten Knoten zugeordnete verknüpfte Zustandsinformation aus der dem ersten Knoten zugeordneten Zustandsinformation und der Zustandsinformation gebildet wird, die dem zweiten und/oder dritten Knoten zugeordnet ist und unter diesen den jeweils besten oder höchstwertigen Zustand repräsentiert.

8. Verfahren nach einem der Ansprüche 1 bis 7,
bei dem die jedem Knoten des Diagnoseobjektbaums jeweils zugeordnete Zustandsinformation unter Berücksichtigung der aggregierten Zustandsinformation des jeweiligen hierarchisch untergeordneten Teilbaums gebildet wird.

9. Verfahren nach einem der Ansprüche 1 bis 8,
bei dem Knoten des Diagnoseobjektbaums, denen einfach vorhandene Automatisierungsgeräte und/oder Komponenten zugeordnet sind, zur Bildung der jeweiligen aggregierten Zustandsinformation an einen jeweils übergeordneten Knoten nur die ihnen jeweils zugeordnete Zustandsinformation weiterleiten.

10. Steuerungsprogramm, das in einen Arbeitsspeicher einer Rechnereinheit ladbar ist und zumindest einen durch einen Prozessor verarbeitbaren Codeabschnitt aufweist, bei dessen Ausführung
- Automatisierungsgeräte und/oder Komponenten des industriellen Automatisierungssystems jeweils durch Knoten innerhalb eines hierarchisch gegliederten Diagnoseobjektbaums repräsentiert werden,
- funktionale Abhängigkeiten zwischen Automatisierungsgeräten und/oder Komponenten durch Verbindungen zwischen Knoten des Diagnoseobjektbaums repräsentiert werden,
- jedem Knoten des Diagnoseobjektbaums jeweils eine Zustandsinformation eines Automatisierungsgeräts oder einer Komponente zugeordnet wird, das/die durch den jeweiligen Knoten repräsentiert wird,
- jedem Knoten des Diagnoseobjektbaums jeweils eine aggregierte Zustandsinformation eines hierarchisch untergeordneten Teilbaums zugeordnet wird, wobei die jeweilige aggregierte Zustandsinformation aus Zustandsinformationen gebildet wird, die vom jeweiligen Teilbaum umfassten Knoten zugeordnet sind,
- Knoten des Diagnoseobjektbaums, denen redundante Automatisierungsgeräte und/oder Komponenten zugeordnet sind, zur Bildung der jeweiligen aggregierten Zustandsinformation an ihren übergeordneten Knoten jeweils eine verknüpfte Zustandsinformation weiterleiten, die aus den jeweiligen Zustandsinformationen gebildet wird, die den jeweiligen zueinander redundanten Automatisierungsgeräten oder Komponenten zugeordnet sind,
- Knoten des Diagnoseobjektbaums, denen redundante Automatisierungsgeräte und/oder Komponenten als Redundanzpartner zugeordnet sind, jeweils durch einen Verweis auf einen jeweiligen nächsten Redundanzpartner miteinander in einer Ringstruktur verknüpft sind,
wenn das Steuerungsprogramm in der Rechnereinheit abläuft.

## Claims

1. Method for monitoring the state within an industrial automation system, in which
- automation devices and/or components (CDev, CPU, CP, PSy, IE1, IE2) of the industrial automation system (CIO-Sys) are each represented by nodes within a hierarchically organized diagnostic object tree,
- functional dependencies between automation devices and/or components (CDev, CPU, CP, PSy, IE1, IE2) are represented by connections between nodes of the diagnostic object tree,
- each node of the diagnostic object tree is respectively assigned an item of state information relating to an automation device or a component represented by the respective node,
**characterized in that**
- each node of the diagnostic object tree is respectively assigned an item of aggregated state information relating to a hierarchically subordinate subtree, wherein the respective aggregated state information is formed from state information assigned to nodes included in the respective subtree,
- nodes of the diagnostic object tree which have been assigned redundant automation devices and/or components (10111, 10122, 10211, 10212) each forward, to their superordinate node for the purpose of forming the respective aggregated state information, an item of linked state information formed from the respective state information assigned to the respective automation devices or components which are redundant with respect to one another,
- nodes of the diagnostic object tree which have been assigned redundant automation devices and/or components (10111, 10122, 10211, 10212) as redundancy partners are each linked to one another in a ring structure by a reference to a respective next redundancy partner.

2. Method according to Claim 1,
in which the linked state information assigned to a first node is formed from an item of state information assigned to the first node and an item of state information assigned to a second node representing a redundant automation device or a redundant component, and in which the linked state information formed for the first node represents at least an identical or equivalent state to the state information assigned to the first node.

3. Method according to Claim 2,
in which, in the case of first combinations of state information relating to the first node and to the second node, the linked state information formed for the first node represents a better or higher-quality state than the state information assigned to the first node, and in which, in the case of second combinations of state information relating to the first node and to the second node, the linked state information formed for the first node represents an identical or equivalent state to the state information assigned to the first node.

4. Method according to Claim 3,
in which the state information respectively assigned to the first node and to the second node represents the states of good, maintenance required, maintenance requested or fault, and in which the first combinations of state information comprise the states of maintenance requested and fault for the first node together with the states of good and maintenance required for the second node.

5. Method according to Claim 4,
in which, in the case of the first combinations of state information relating to the first node and to the second node, the linked state information formed for the first node represents a state which is better or has a higher quality by a state level than the state information assigned to the first node.

6. Method according to either of Claims 4 and 5,
in which the second combinations of state information comprise all combinations except for the first combinations.

7. Method according to one of Claims 2 to 6,
in which the first node, the second node and a third node represent automation devices and/or components which are redundant with respect to one another, and in which the linked state information assigned to a first node is formed from the state information assigned to the first node and the state information which is assigned to the second and/or third node and, among these, represents the respective best or highest-quality state.

8. Method according to one of Claims 1 to 7,
in which the state information respectively assigned to each node of the diagnostic object tree is formed taking into account the aggregated state information relating to the respective hierarchically subordinate subtree.

9. Method according to one of Claims 1 to 8,
in which nodes of the diagnostic object tree which have been assigned singly present automation devices and/or components forward, to a respectively superordinate node for the purpose of forming the respective aggregated state information, only the state information respectively assigned to them.

10. Control program which can be loaded into a main memory of a computer unit and has at least one code section which can be processed by a processor, during the execution of which
- automation devices and/or components of the industrial automation system are each represented by nodes within a hierarchically organized diagnostic object tree,
- functional dependencies between automation devices and/or components are represented by connections between nodes of the diagnostic object tree,
- each node of the diagnostic object tree is respectively assigned an item of state information relating to an automation device or a component represented by the respective node,
- each node of the diagnostic object tree is respectively assigned an item of aggregated state information relating to a hierarchically subordinate subtree, wherein the respective aggregated state information is formed from state information assigned to nodes included in the respective subtree,
- nodes of the diagnostic object tree which have been assigned redundant automation devices and/or components each forward, to their superordinate node for the purpose of forming the respective aggregated state information, an item of linked state information formed from the respective state information assigned to the respective automation devices or components which are redundant with respect to one another,
- nodes of the diagnostic object tree which have been assigned redundant automation devices and/or components as redundancy partners are each linked to one another in a ring structure by a reference to a respective next redundancy partner,
when the control program runs in the computer unit.

## Revendications

1. Procédé de contrôle d'état dans un système d'automatisation industriel, dans lequel
- on représente des appareils d'automatisation et/ou des composants (CDev, CPU, CP, PSy, IE1, IE2) du système (CIO-Sys) d'automatisation industriel, chacun par des noeuds dans un arbre objet de diagnostic organisé hiérarchiquement,
- on représente des dépendances fonctionnelles entre des appareils d'automatisation et/ou des composants (CDev, CPU, CP, PSy, IE1, IE2) par des liaisons entre des noeuds de l'arbre objet de diagnostic,
- on affecte, à chaque noeud de l'arbre objet de diagnostic, respectivement, une information d'état d'un appareil d'automatisation ou d'un composant, qui est représenté par le noeud respectif,
**caractérisé en ce que**
- on affecte, à chaque noeud de l'arbre objet de diagnostic, respectivement, une information agrégée d'état d'un sous-arbre subordonné hiérarchiquement, l'information agrégée d'état étant formée d'informations d'état, qui sont affectées aux noeuds compris par le sous-arbre respectif,
- des noeuds de l'arbre objet de diagnostic, auxquels sont affectés des appareils d'automatisation et/ou des composants (IO111, IO122, IO211, IO212) redondants, acheminent à leurs noeuds supérieurs hiérarchiquement, respectivement une information d'état combinée formée des informations d'état respectives, qui sont affectées aux appareils d'automatisation ou aux composants redondants les uns par rapport aux autres,
- des noeuds de l'arbre objet de diagnostic, auxquels sont affectés des appareils d'automatisation et/ou des composants (IO111, IO122, IO211, IO212), comme partenaires redondants, sont combinés, respectivement, entre eux suivant une structure en anneau par un renvoi à un partenaire redondant respectivement le plus proche.

2. Procédé suivant la revendication 1,
dans lequel on forme l'information d'état combinée affectée à un premier noeud, à partir d'une information d'état affectée au premier noeud et d'une information d'état, qui est affectée à un deuxième noeud représentant un appareil d'automatisation redondant ou un composant redondant, et dans lequel l'information d'état combinée formée pour le premier noeud représente au moins un même état que l'information d'état affectée au premier noeud ou un état équivalent.

3. Procédé suivant la revendication 2,
dans lequel l'information d'état combinée formée pour le premier noeud représente, dans de premières combinaisons d'information d'état du premier noeud et du deuxième noeud, un état meilleur ou de plus grande valeur que l'information d'état affectée au premier noeud et dans lequel l'information d'état combinée formée pour le premier noeud, dans des deuxièmes combinaisons d'information d'état du premier noeud et du deuxième noeud, représente un même état que l'information d'état affectée au premier noeud ou un état équivalent.

4. Procédé suivant la revendication 3,
**caractérisé en ce que** les informations d'état affectées respectivement au premier noeud et au deuxième noeud, représentent les états bon, entretien nécessaire, entretien demandé ou défaut et dans lequel les premières combinaisons d'information d'état comprennent les états entretien demandé et défaut du premier noeud, ensemble avec les états bon et entretien nécessaire du deuxième noeud.

5. Procédé suivant la revendication 4,
dans lequel les informations d'état combinées formées pour le premier noeud, dans les premières combinaisons d'information d'état du premier noeud et du deuxième noeud, représentent un état meilleur ou de valeur plus grande d'un échelon d'état que l'information d'état affectée au premier noeud.

6. Procédé suivant l'une des revendications 4 ou 5,
dans lequel les deuxièmes combinaisons d'information d'état comprennent toutes les combinaisons, à l'exception des premières combinaisons.

7. Procédé suivant l'une des revendications 2 à 6,
dans lequel le premier noeud, le deuxième noeud et un troisième noeud représentent des appareils d'automatisation et/ou des composants redondants entre eux et dans lequel l'information d'état combinée affectée au un premier noeud est formée à partir de l'information d'état affectée au premier noeud et de l'information d'état, qui est affectée au deuxième et/ou au troisième noeud, et représente, parmi ceux-ci, l'état le meilleur ou de plus grande valeur.

8. Procédé suivant l'une des revendications 1 à 7,
dans lequel on forme l'information d'état affectée respectivement à chaque noeud de l'arbre objet de diagnostic, en tenant compte de l'information agrégée d'état du sous-arbre respectif subordonné hiérarchiquement.

9. Procédé suivant l'une des revendications 1 à 8,
dans lequel des noeuds de l'arbre objet de diagnostic, auxquels sont affectés des appareils d'automatisation et/ou des composants présents, n'acheminent, pour former l'information agrégée d'état respective, à un noeud respectivement supérieur hiérarchiquement, que l'information d'état qui leur est affectée respectivement.

10. Programme de commande, qui peut être chargé dans une mémoire de travail d'une unité informatique et qui a au moins une partie de code pouvant être traitée par un processeur dans l'exécution duquel
- on représente des appareils d'automatisation et/ou des composants du système d'automatisation industriel, chacun par des noeuds dans un arbre objet de diagnostic organisé hiérarchiquement,
- on représente des dépendances fonctionnelles entre des appareils d'automatisation et/ou des composants par des liaisons entre des noeuds de l'arbre objet de diagnostic,
- on affecte, à chaque noeud de l'arbre objet de diagnostic, respectivement, une information d'état d'un appareil d'automatisation ou d'un composant, qui est représenté par le noeud respectif,
- on affecte, à chaque noeud de l'arbre objet de diagnostic, respectivement, une information agrégée d'état d'un sous-arbre subordonné hiérarchiquement, l'information agrégée d'état étant formée d'informations d'état, qui sont affectées aux noeuds compris par le sous-arbre respectif,
- des noeuds de l'arbre objet de diagnostic, auxquels sont affectés des appareils d'automatisation et/ou des composants redondants, acheminent à leurs noeuds supérieurs hiérarchiquement, respectivement une information d'état combinée formée des informations d'état respectives, qui sont affectées aux appareils d'automatisation ou aux composants redondants les uns par rapport aux autres,
- des noeuds de l'arbre objet de diagnostic, auxquels sont affectés des appareils d'automatisation et/ou des composants comme partenaires redondants, sont combinés, respectivement, entre eux suivant une structure en anneau par un renvoi à un partenaire redondant respectivement le plus proche,
lorsque le programme de commande se déroule dans l'unité informatique.
